# EUROPEAN PATENT SPECIFICATION

(11) **EP 4 280 798 B1**
(45) Date of publication and mention of the grant of the patent: **17.12.2025**
(21) Application number: 21933839.9
(22) Date of filing: 31.03.2021
(51) Int. Cl.: H04W 76/28, H04W 24/02, H04W 52/02, H04W 76/14, H04W 92/18, H04W 72/40

(54) **TIMER CONTROL METHODS, APPARATUSES, CHIP, COMPUTER READABLE STORAGE MEDIUM AND COMPUTER PROGRAM PRODUCT**
VERFAHREN, VORRICHTUNGEN, CHIP, COMPUTERLESBARES SPEICHERMEDIUM UND COMPUTERPROGRAMM-PRODUKT ZUR ZEITSTEUERUNG
MÉTHODES DE CONTRÔLE DE LA MINUTERIE, APPAREILS, PUCE, SUPPORT DE STOCKAGE LISIBLE PAR ORDINATEUR ET PRODUIT DE PROGRAMME INFORMATIQUE

(43) Date of publication of application: 22.11.2023
(73) Proprietor: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); LENG, Bingxue, Dongguan, Guangdong 523860 (CN)
(74) Representative: Novagraaf Technologies
(86) International application number: PCT/CN2021/084679
(87) International publication number: WO 2022/205174

(56) References cited:
- EP-A1- 4 017 211
- EP-A1- 4 187 967
- EP-A1- 4 247 088
- EP-A1- 4 271 055
- WO-A1-2021/032026
- WO-A1-2021/218740
- WO-A1-2022/165843
- CN-A- 111 480 391
- CN-A- 111 800 893
- CN-A- 113 225 843
- CATT: "Sidelink DRX Timer Maintenance and Active Time Definition", 3GPP DRAFT; R2-2100236, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic; 20210125 - 20210205, 15 January 2021 (2021-01-15), Mobile Competence Centre ; 650, route des Lucioles ; F-06921 Sophia-Antipolis Cedex ; France , XP051973439
- XIAOMI: "Discussion on sidelink DRX timer handling", 3GPP DRAFT; R2-2101600, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic; 20210125 - 20210205, 15 January 2021 (2021-01-15), Mobile Competence Centre ; 650, route des Lucioles ; F-06921 Sophia-Antipolis Cedex ; France , XP051974478

## Description

### TECHNICAL FIELD

Embodiments of the present disclosure relate to the technical field of mobile communications, and more particularly, to methods for controlling a timer, terminal devices, a chip, a computer readable storage medium, and a computer program product.

### BACKGROUND

In a topic of sidelink enhancement, the introduction of a Discontinuous Reception (DRX) mechanism into sidelink transmission is discussed, so as to achieve a purpose of saving power of a terminal device through the DRX mechanism.

At present, the DRX mechanism in the sidelink transmission is defined according to directions, and the DRX mechanism in different directions runs independently. For example, during the interaction between a first terminal device and a second terminal device, the first terminal device side and the second terminal device side have independent DRX mechanisms, respectively. This will lead to a problem of large latency during the interaction between the first terminal device and the second terminal device.

EP4187967A1 proposes a method for operating a first device in a wireless communication system. The method includes the steps of: starting a first time related to an on-duration interval; transmitting first sidelink control information (SCI) for scheduling a first physical sidelink shared channel (PSSCH) and second SCI to a second device through a physical sidelink control channel (PSCCH); transmitting the second SCI including information associated with a channel state information (CSI) request to the second device through the first PSSCH; and receiving, from the second device, a medium access control (MAC) control element (CE) including a CSI report associated with the CSI request, on the basis of a second timer which is in operation.

EP4271055A1 proposes a wireless communication method and a terminal device. A first terminal receives a first message sent by a second terminal; acquires a target physical layer identifier and/or a target medium access control (MAC) layer identifier in the first message; and executes a discontinuous reception (DRX) operation according to the target physical layer identifier and/or the target MAC layer identifier.

WO2021/032026A1 proposes a discontinuous reception (DRX) method. In a first time unit, such as the first symbol, after a hybrid automatic repeat request (HARQ) feedback occasion of a sidelink (SL) HARQ process, a first terminal may start drx-HARQ-RTT-TimerSL, and start drx-RetransmissionTimerSL when the drx-HARQ-RTT-TimerSL times out. During the operation of the drx-RetransmissionTimerSL, the first terminal monitors a physical downlink control channel (PDCCH).

EP4247088A1 discloses an information sending method. The method includes that: a first terminal determines a time range, determines a resource set according to the time range, and sends the resource set to a second terminal in a target time unit, where the resource set is used to assist the second terminal with resource selection.

### SUMMARY

The present invention is set out in the appended set of claims.

The claimed invention provides methods for controlling a timer, terminal devices, a chip, a computer readable storage medium, and a computer program product.

In accordance with the invention, a method for controlling a timer is provided in claim 1.

In accordance with the invention, a method for controlling a timer is provided in claim 3.

In accordance with the invention, a terminal device is provided in claim 8.

In accordance with the invention, a terminal device is provided in claim 9.

In accordance with the invention, a chip is provided in claim 10.

In accordance with the invention, a computer readable storage medium is provided in claim 11.

In accordance with the invention, a computer program product is provided in claim 12.

Through the above technical solution, the DRX mechanism in the sidelink transmission is defined according to the directions, and the realization of the DRX mechanism is based on timers. During the interaction between the first terminal device and the second terminal device, the timers at both ends of the interaction will be triggered to start or restart simultaneously, so that both ends of the interaction are in an active state, so as to avoid a problem of long latency in the interaction between the first terminal device and the second terminal device.

### BRIEF DESCRIPTION OF THE DRAWINGS

The drawings described herein are intended to provide a further understanding of the present disclosure and form a part of the present disclosure. The schematic embodiments of the present disclosure and the description thereof are intended to explain the present disclosure and do not constitute an improper limitation of the present disclosure. In the drawings:
FIG. 1 is a schematic diagram of architecture of a communication system according to an embodiment of the present disclosure.
FIG. 2-1 is a schematic diagram of a mode A according to an embodiment of the present disclosure.
FIG. 2-2 is a schematic diagram of a mode B according to an embodiment of the present disclosure.
FIG. 3 is a schematic diagram of a DRX cycle according to an embodiment of the present disclosure.
FIG. 4 is a schematic diagram of an active time corresponding to a DRX-InactivityTimer according to an embodiment of the present disclosure.
FIG. 5 is a first flowchart of a method for controlling a timer according to an embodiment of the present disclosure.
FIG. 6 is a second flowchart of a method for controlling a timer according to an embodiment of the present disclosure.
FIG. 7 is a third flowchart of a method for controlling a timer not being part of the present disclosure.
FIG. 8 is a fourth flowchart of a method for controlling a timer according to an embodiment of the present disclosure.
FIG. 9 is a fifth flowchart of a method for controlling a timer according to an embodiment of the present disclosure.
FIG. 10 is a sixth flowchart of a method for controlling a timer according to an embodiment of the present disclosure.
FIG. 11 is a first schematic structural diagram of a device for controlling a timer according to an embodiment of the present disclosure.
FIG. 12 is a second schematic structural diagram of a device for controlling a timer according to an embodiment of the present disclosure.
FIG. 13 is a schematic structural diagram of a communication device according to an embodiment of the present disclosure.
FIG. 14 is a schematic structural diagram of a chip according to an embodiment of the present disclosure.
FIG. 15 is a schematic block diagram of a communication system according to an embodiment of the present disclosure.

### DETAILED DESCRIPTION

The technical solutions in the embodiments of the present disclosure will be described below in combination with the drawings in the embodiments of the present disclosure. It is apparent that the described embodiments are not all embodiments but part of embodiments of the present disclosure.

The technical solutions of the embodiments of the present disclosure may be applied to various communication systems, such as a Long Term Evolution (LTE) system, an LTE Frequency Division Duplex (FDD) system, an LTE Time Division Duplex (TDD) system, a 5G communication system or a future communication system.

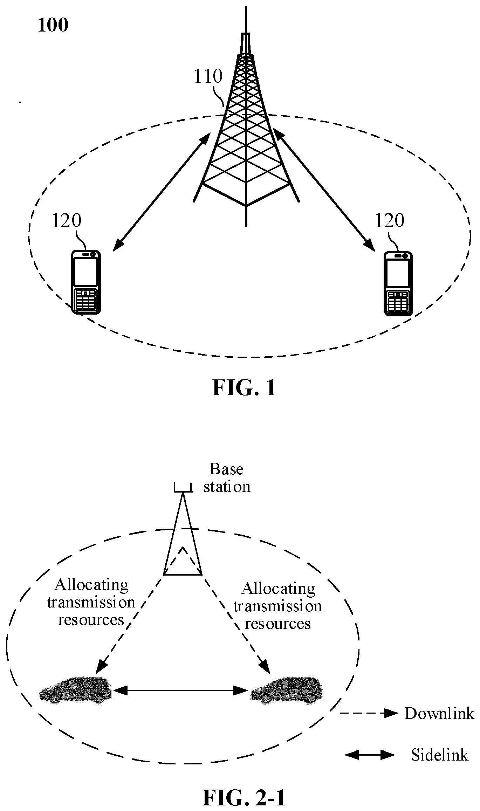

Exemplarily, a communication system 100 to which the embodiments of the present disclosure are applied is illustrated in FIG. 1. The communication system 100 may include a network device 110. The network device 110 may be a device that communicates with a terminal device 120 (also referred to as a communication terminal, a terminal). The network device 110 may provide communication coverage for a specific geographic area and may communicate with a terminal device within the coverage area. In at least one example, the network device 110 may be an Evolutional Node B (eNB or eNodeB) in the LTE system or a wireless controller in a Cloud Radio Access Network (CRAN), or the network device may be a mobile switching center, a relay station, an access point, a vehicle-mounted device, a wearable device, a hub, a switch, a bridge, a router, a network-side device in a 5G network, a network device in a future communication system or the like.

The communication system 100 also includes at least one terminal device 120 located within the coverage of the network device 110. The "terminal" used herein includes, but is not limited to, connection via wired lines, such as connection via Public Switched Telephone Networks (PSTN), Digital Subscriber Line (DSL), digital cables, direct cables; and/or another data connection/network; and/or via a wireless interface, such as for a cellular network, a Wireless Local Area Network (WLAN), a digital television network such as DVB-H network, a satellite network, a AM-FM broadcast transmitter; and/or means of another terminal arranged to receive/transmit a communication signal; and/or an Internet of Things (IoT) device. A terminal device configured to communicate via a wireless interface may be referred to as a "wireless communication terminal", "wireless terminal" or "mobile terminal". Examples of mobile terminals include, but are not limited to, satellite or cellular telephones; a Personal Communications System (PCS) terminal that may combine a cellular radio telephone with data processing, fax and data communications capability; a Personal Digital Assistant (PDA) that may include a radio telephone, a pager, Internet/intranet access, a Web browser, memo pad, calendar and/or Global Positioning System (GPS) receiver; and a conventional laptop and/or palmtop receiver or other electronic devices including a radio telephone transceiver. The terminal device may be referred to an access terminal, a User Equipment (UE), a subscriber unit, a subscriber station, a mobile station, a mobile radio station, a remote station, a remote terminal, a mobile device, a user terminal, a terminal, a wireless communication device, a user agent or a user device. The access terminal may be a cellular telephone, a cordless telephone, a Session Initiation Protocol (SIP) telephone, a Wireless Local Loop (WLL) station, a Personal Digital Assistant (PDA), a handheld device with a wireless communication function, a computing device or other processing device connected to a wireless modem, a vehicle-mounted device, a wearable device, a terminal device in a 5G network, a terminal device in a future evolved PLMN or the like.

In one example, Device to Device (D2D) communication may be performed between the terminal devices 120.

In one example, the 5G communication system or 5G network may also be referred to as a New Radio (NR) system or NR network.

FIG. 1 exemplarily illustrates one network device and two terminal devices. In one example, the communication system 100 may include multiple network devices and another number of terminal devices may be included within the coverage of each network device, which is not limited in the embodiments of the present disclosure.

In one example, the communication system 100 may also include another network entity such as a network controller or a mobility management entity, which is not limited in the embodiments of the present disclosure.

It is to be understood that a device with communication function in the network/system in the embodiments of the present disclosure may be referred to as a communication device. Taking the communication system 100 illustrated in FIG. 1 as an example, communication devices may include the network device 110 and the terminal 120 with the communication function. The network device 110 and the terminal 120 may be specific devices mentioned above, and details are not described herein. The communication device may further include another device in the communication system 100, for example, another network entity such as a network controller or a mobility management entity, which is not limited in the embodiments of the present disclosure.

It is to be understood that terms "system" and "network" in the disclosure may usually be exchanged. In the disclosure, the term "and/or" is only an association relationship describing associated objects and represents that three relationships may exist. For example, A and/or B may represent three conditions: i.e., independent existence of A, existence of both A and B and independent existence of B. In addition, character "/" in the disclosure usually represents that previous and next associated objects form an "or" relationship.

To facilitate understanding of the technical solutions of the embodiments of the present disclosure, the technical solutions related to the embodiments of the present disclosure are described below.

### Device to Device (D2D)

D2D communication is based on Sidelink (SL) transmission technology, and is different from the traditional cellular system in which communication data is received or transmitted through the base station. Internet of Vehicles system adopts D2D communication mode (i.e., a mode of device-to-device direct communication), so that it has higher spectrum efficiency and lower transmission latency. For D2D communication, the Third Generation Partnership Project (3GPP) defines two transmission modes: mode A and mode B. The mode A and mode B are described below.

Mode A: as illustrated in FIG. 2-1, transmission resources of the terminal device are allocated by the base station, and the terminal device transmits data on the sidelink according to resources allocated by the base station. The base station may allocate resources for a single transmission to the terminal device, and may also allocate resources for a semi-static transmission to the terminal device.

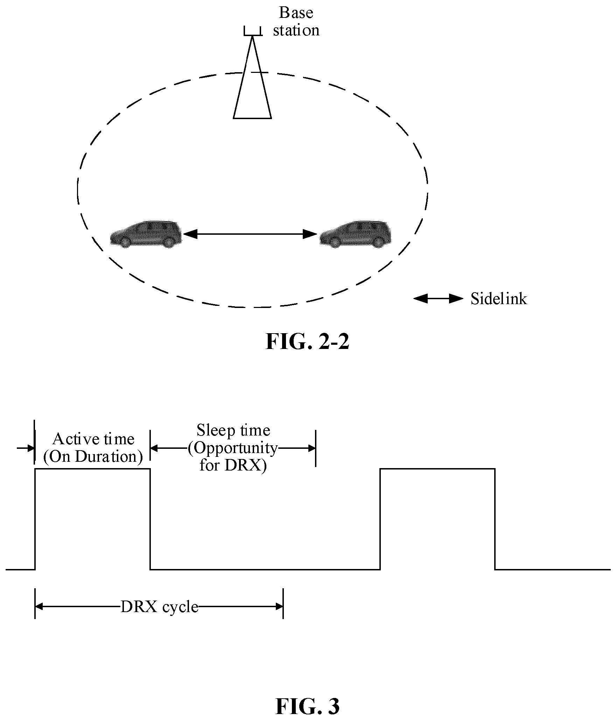

Mode B: as illustrated in FIG. 2-2, the terminal device selects a resource from a resource pool to transmit data. Specifically, the terminal device may select transmission resources from the resource pool by listening or random selection.

In the 3GPP, the D2D communication is divided into the following different stages for research.

Proximity based Service (ProSe): device-to-device communication has been researched for ProSe scenarios, which mainly focuses on services of public security. In the ProSe, by configuring the position of the resource pool in the time domain, for example, the resource pool is discontinuous in the time domain, the purpose of discontinuous transmission/reception of the terminal device on the sidelink is achieved, thus the effect of saving power is achieved.

Vehicle to Everything (V2X): device-to-device communication has been researched for communication scenarios between vehicles and other devices, and it mainly focuses on the services for vehicle-to-vehicle or vehicle-to-person communication, in which the vehicle moves at relatively high speed. In the V2X, the power efficiency is not the main problem since the vehicle system has continuous power supply, but the latency of data transmission is the main problem, thus, the terminal device is required to transmit and receive continuously in the system design.

Further Enhancement Device to Device (FeD2D): device-to-device communication has been researched for scenarios of wearable devices accessing to the network through mobile phones, and it mainly focuses on scenarios of low mobile speed and low power access. In the FeD2D, the 3GPP concluded, in the pre-research stage, that the base station may configure DRX parameters of a remote terminal device through a relay terminal device.

### NR V2X

In the NR V2X, autopilot needs to be supported, thus, higher requirements (such as higher throughput, lower latency, higher reliability, larger coverage, more flexible resource allocation, and the like) are put forward for data interaction between vehicles.

On the basis of LTE V2X, NR V2X is not limited to broadcast scenarios, but further expanded to unicast and multicast scenarios, and researched applications of the V2X in these scenarios. For the unicast transmission mode, there is only one terminal device at the receiving end. For the multicast transmission mode, the receiving end is all the terminal devices in a communication group or within a certain transmission distance. For the broadcast transmission mode, the receiving end is any one of terminal devices.

In the NR V2X system, a variety of transmission modes are introduced, including mode 1 and mode 2. The mode 1 is a mode in which the network device allocates the transmission resources for the terminal device (similar to the mode A described above), and the mode 2 is a mode in which the terminal device selects the transmission resources (similar to the mode B described above). In addition, the terminal device may be in a hybrid mode, specifically, both the mode 1 and the mode 2 may be used for resource acquisition.

In the NR V2X system, a sidelink feedback mechanism is introduced, that is, a feedback-based Hybrid Automatic Repeat reQuest (HARQ) retransmission. The sidelink feedback mechanism is not limited to unicast scenarios, but may also be applied to multicast scenarios.

A resource selection mode of the mode 2 in the NR V2X: in the NR V2X, some new characteristics are introduced, such as, supporting a large number of non-periodic services, increasing the number of retransmissions and more flexible resource reservation period. All these characteristics have a great influence on the mode of independent resource selection of the terminal device (i.e. the mode 2). Therefore, on the basis of the above mode B, a resource selection scheme suitable for the NR V2X is redesigned, which is called as the mode 2.

In the mode 2, the terminal device selects resources that are not reserved by other terminal devices or reserved by other terminal devices but have a lower reception power from the resource pool by decoding Sidelink Control Information (SCI) transmitted by other terminal devices and measuring the sidelink received power. The resource selection algorithm of the mode 2 is divided into two main steps, that is, the terminal device determines a candidate resource set firstly, and then selects resources from the candidate resource set to transmit data. These two steps are described below.

In the first step: the terminal device determines the candidate resource set.

Specifically, 1) the terminal device takes all available resources in a resource selection window as a resource set A.

2) The terminal device performs the following exclusion operations on resources in the resource set A.

The terminal device determines whether the resource is reserved by other terminal devices according to listening results in a resource listening window. The terminal device performs resource exclusion according to an un-listening slot and a first-order SCI detected. After the resource exclusion is completed, when the number of remaining resources in the resource set A is less than a certain proportion, the terminal device will raise a Reference Signal Received Power (RSRP) threshold, for example, raising the RSRP threshold by 3dB, and repeat to perform resource exclusion until the number of remaining resources in the resource set A is greater than or equal to the proportion. As an example, a value range of the proportion is {20%, 35%, 50%}, and a value of the specific proportion is configured by the network or pre-configured in unit of resource pool. Finally, after the resource exclusion operations, the remaining resource set B is the candidate resource set of the terminal device.

In the second step: the terminal device selects transmission resources from the candidate resource set.

Specifically, the terminal device randomly selects one or more transmission resources with a moderate probability in the resource set B. It should to be noted that the following limitations in the time domain should be met when multiple transmission resources are selected.

First limitation: after removing some exceptional cases, the terminal device shall enable a selected retransmission resource to be indicated by the first-order SCI previously transmitted. The above exceptional cases include the following cases. First case: after performing the resource exclusion, the terminal device cannot select resources meeting the time domain limitation from the resource set B. Second case: Due to factors such as resource preemption, congestion control and conflict with the uplink services, the terminal device abandons transmission, resulting in transmission resources of a certain retransmission not being indicated by the first-order SCI previously transmitted.

Second limitation: the terminal device shall guarantee any two selected transmission resources. Responsive to the previous transmission resource requiring the HARQ feedback, the two resources are at least separated by a specified duration in the time domain. Responsive to the resource selection being unable to meet the time domain limitation, depending on the implementation of the terminal device itself, the selection of some retransmission resources may be abandoned or the HARQ feedback may be activated for some transmissions.

### DRX Mechanism of NR Uu Port

In the wireless network, when the terminal device always listens to the Physical Downlink Control Channel (PDCCH), it results in a higher power consumption of the terminal device. Therefore, the DRX mechanism is introduced, and the terminal device discontinuously listens to PDCCH according to the DRX configuration, so as to achieve the purpose of saving power.

The DRX mechanism may be applied to the terminal device in an idle state, and may also be applied to the terminal device in a connected state. The following mainly describes the DRX mechanism of the terminal device in the connected state.

A basic mechanism of the DRX is to configure one DRX cycle for the terminal device. As illustrated in FIG. 3, the DRX cycle includes an "On Duration" time and an "Opportunity for DRX" time, where the terminal device listens to and receives PDCCH within the "On Duration" time (also referred to as an active time) (that is, the terminal device is in an active state). Responsive to not receiving PDCCH within the "On Duration" time, the terminal device will stop continuous listening and turn to sleep state within the "Opportunity for DRX" time (also referred to as a sleep time), and the terminal device does not receive PDCCH to reduce power consumption. In addition, the DRX mechanism also has a series of other more complex mechanisms.

In the topic of sidelink enhancement, introduction of the DRX mechanism into the sidelink transmission is discussed. In the DRX mechanism, the terminal device controls the DRX behavior of the terminal device according to the DRX configurations configured by the network. The DRX configurations include, as an example, at least one of the following parameters: drx-onDurationTimer, drx-SlotOffset, drx-StartOffset, drx-InactivityTimer, drx-RetransmissionTimerDL, drx-RetransmissionTimerUL, drx-LongCycle, drx-ShortCycle, drx-ShortCycleTimer, drx-HARQ-RTT-TimerDL, or drx-HARQ-RTT-TimerUL.

In the NR, when the terminal device is configured with the DRX configuration, the terminal device needs to detect PDCCH during the DRX active time, or the terminal device is in a DRX active state during the DRX active time. The DRX active time is determined by the following factors.
1) A running period of any of the following timers belongs to the DRX active time:
   drx-onDurationTimer;
   drx-InactivityTimer;
   drx-RetransmissionTimerDL;
   drx-RetransmissionTimerUL;
   ra-ContentionResolutionTimer; and
   msgB-ResponseWindow.
2) A period of a state of pending after Scheduling Request (SR) transmission belongs to the DRX active time.
3) After successfully receiving a Random Access Response (RAR) corresponding to a random access preamble, a period during which no PDCCH indicating new transmission data is received belongs to the DRX active time.

As illustrated in FIG. 3, for the drx-onDurationTimer, a point of time to start or restart is determined based on a configured DRX cycle which is at a fixed point of time. A running period of the Drx-onDurationTimer corresponds to the "On Duration" time.

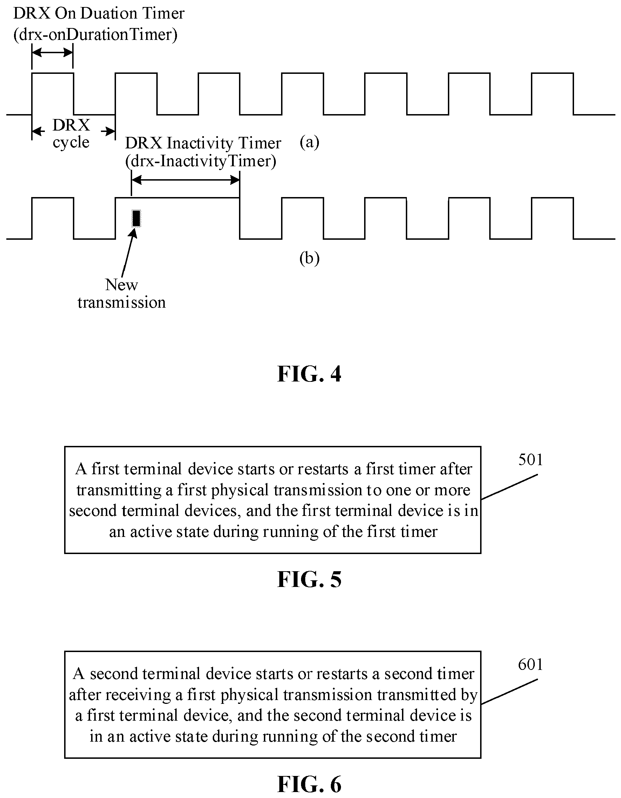

As illustrated in FIG. 4, for the drx-InactivityTimer, a condition for starting or restarting the drx-InactivityTimer is that responsive to receiving a PDCCH indicating an initial downlink or uplink transmission (i.e. a new transmission), the terminal device starts or restarts the drx-InactivityTimer.

At present, the DRX mechanism in the sidelink transmission is defined according to directions, and the DRX mechanism in different directions runs independently. For example, during the interaction between a first terminal device and a second terminal device, the first terminal device side and the second terminal device side have independent DRX mechanisms, respectively. Responsive to a transmission 1 transmitted by the first terminal device to the second terminal device, the second terminal device starts the drx-InactivityTimer and waits for the subsequent transmissions of the first terminal device. When the second terminal device needs to respond to the first terminal device for the transmission 1, for example, the second terminal device transmits transmission 2 to the first terminal device, the transmission 2 needs to wait for the first terminal device to enter the DRX active state (i.e. the first terminal device is in the DRX active time) before transmitting since the DRX mechanism is defined according to the directions, it will lead to a long latency between the transmission 1 and the transmission 2. It can be seen that the current DRX mechanism will lead to a problem of large latency in the interaction between the first terminal device and the second terminal device. Therefore, the following technical solutions of the embodiments of the present disclosure are proposed.

It should be noted that the technical solutions of the embodiments of the present disclosure may be applied to the sidelink communication, in addition, may be applied to the unicast scenarios, the multicast scenarios, broadcast scenarios and the like in the sidelink communication.

FIG. 5 is a first flowchart of a method for controlling a timer according to an embodiment of the present disclosure. As illustrated in FIG. 5, the method for controlling a timer includes the following operation.

In operation 501: a first terminal device starts or restarts a first timer after transmitting a first physical transmission to one or more second terminal devices, and the first terminal device is in an active state during running of the first timer.

In some optional implementations, the first physical transmission may be a transmission corresponding to the first data.

In some optional implementations, the first physical transmission is a Physical Sidelink Control Channel (PSCCH) transmission corresponding to the first data. Here, the PSCCH is used to schedule a Physical Sidelink Shared Channel (PSSCH), and the PSSCH is used to transmit the first data.

In some optional implementations, the first physical transmission is a PSSCH transmission corresponding to the first data. Here, the PSSCH is used to transmit the first data.

In some optional implementations, the first physical transmission includes the PSCCH transmission and the PSSCH transmission corresponding to the first data. The PSCCH is used to schedule the PSSCH, and the PSSCH is used to transmit the first data. It should be noted that the time domain position of the PSCCH transmission is located before the time domain position of the PSSCH transmission.

In some optional implementations not being part of the invention, for the unicast scenarios, the first terminal device transmits the first physical transmission to one second terminal device. Specifically, the first terminal device transmits the first physical transmission within an active time of the one terminal device.

In some implementations, for the multicast scenarios, the first terminal device transmits the first physical transmission to multiple second terminal devices. Specifically, the first terminal device transmits the first physical transmission within a common active time of the multiple terminal devices.

It should be noted that, in the embodiments of the present disclosure, the terminal device is in an active state within the active time of the terminal device. The "active time" may also be referred to as the "DRX active time", and the embodiments of the present disclosure do not limit the name of the active time.

In the embodiments of the present disclosure, the first terminal device starts or restarts the first timer after transmitting the first physical transmission to the one or more second terminal devices, and the first terminal device is in the active state during the running of the first timer.

In the embodiments of the present disclosure, the first terminal device side has the first timer.

In some optional implementations, the first timer may be understood as one timer, which may be understood as a unified timer on the transmitting side and the receiving side. The first terminal device is capable of performing transmission and reception during the running of the first timer. In other words, the first terminal device is in at least one of a transmitting active state or a receiving active state during the running of the first timer. In other words, a running period of the first timer is at least one of a tx active time or an rx active time of the first terminal device.

In some optional implementations, the first timer may be understood as two timers. Specifically, the first timer includes at least one of a first transmitting side timer or a first receiving side timer. The first terminal device is capable of transmitting during running of the first transmitting side timer; and the first terminal device is capable of receiving during running of the first receiving side timer. In other words, the first terminal device is in the transmitting active state during the running of the first transmitting side timer, and the first terminal device is in the receiving active state during the running of the first receiving side timer. In other words, the running period of the first transmitting side timer is the tx active time of the first terminal device, and the running period of the first receiving side timer is the rx active time of the first terminal device.

In the embodiments of the present disclosure, the timer in the above solution may be a drx-InactivityTimer, or may be simply referred to as an InactivityTimer. Not limited thereto, the timer in the above solution may also be other types of timers, and the terminal device is in the active state during the running of the times. For example, the timer in the above scheme may also be any one of the following timers:
drx-RetransmissionTimerDL;
drx-RetransmissionTimerUL;
ra-ContentionResolutionTimer; and
msgB-ResponseWindow.

As an example, the first terminal device has a tx inactivityTimer and an rx inactivityTimer.

As an example, the first terminal device has one inactivity timer, which may serve as both the tx inactivityTimer and the rx inactivityTimer.

In some optional implementations, the first terminal device receives a second physical transmission transmitted by each of at least some of the one or more second terminal devices in a case that the first terminal device is capable of receiving.

Here, the second physical transmission is associated with the first physical transmission. That is, the second terminal device responds to the first physical transmission after receiving the first physical transmission, so as to transmit the second physical transmission to the first terminal device.

In some optional implementations, the second physical transmission may be a transmission corresponding to the second data.

In some optional implementations, the second physical transmission is a PSCCH transmission corresponding to the second data. Here, the PSCCH is used to schedule the PSSCH, and the PSSCH is used to transmit the second data.

In some optional implementations, the second physical transmission is a PSSCH transmission corresponding to the second data. Here, the PSSCH is used to transmit the second data.

In some optional implementations, the second physical transmission includes a PSCCH transmission and a PSSCH transmission corresponding to the second data. The PSCCH is used to schedule the PSSCH, and the PSSCH is used to transmit the second data. It should be noted that the time domain position of the PSCCH transmission is located before the time domain position of the PSSCH transmission.

In some optional implementations, the first physical transmission may be a feedback transmission corresponding to the first physical transmission, such as a HARQ feedback transmission.

In some optional implementations, the first physical transmission is a Physical Sidelink Feedback Channel (PSFCH) transmission, where the PSFCH is used to transmit HARQ feedback information, and the HARQ feedback information is feedback information corresponding to the first physical transmission. For example, the HARQ feedback information is ACK information or NACK information, where the ACK information indicates that the second terminal device successfully received the first physical transmission, and the NACK information indicates that the second terminal device fails to receive the first physical transmission.

In some optional implementations, the first terminal device transmits a third physical transmission to at least some of the one or more second terminal devices in a case that the first terminal device is capable of transmitting.

Here, the third physical transmission is associated with at least one of the first physical transmission or the second physical transmission.

In some optional implementations, the third physical transmission is a retransmission of the first physical transmission. For example, the second physical transmission carries the NACK information, the first terminal device determines that the first physical transmission is not successfully received by the second terminal device according to the NACK information, and retransmits the first physical transmission to the second terminal device.

In some optional implementations, the third physical transmission is a next new transmission of the first physical transmission. For example, the second physical transmission carries the ACK information, and the first terminal device determines that the first physical transmission is successfully received by the second terminal device according to the ACK information, and transmits a new transmission to the second terminal device.

In the technical solutions of the embodiments of the present disclosure, the first terminal device may, only being in the active state, transmit the physical transmissions to other terminal devices and/or receive the physical transmissions transmitted by other terminal devices. In order to shorten the interaction latency between the first terminal device and other terminal devices, the first terminal device starts or restarts the first timer for controlling the active state after transmitting the first physical transmission, so that the first terminal device may interact with other terminal devices in time.

FIG. 6 is a second flowchart of a method for controlling a timer according to an embodiment of the present disclosure. As illustrated in FIG. 6, the method for controlling the timer includes the following operation.

In operation 601: a second terminal device starts or restarts a second timer after receiving a first physical transmission transmitted by a first terminal device, and the second terminal device is in an active state during running of the second timer.

In some optional implementations, the first physical transmission may be a transmission corresponding to the first data.

In some optional implementations, the first physical transmission is a PSCCH transmission corresponding to the first data. Here, the PSCCH is used to schedule a PSSCH, and the PSSCH is used to transmit the first data.

In some optional implementations, the first physical transmission is a PSSCH transmission corresponding to the first data. Here, the PSSCH is used to transmit the first data.

In some optional implementations, the first physical transmission includes the PSCCH transmission and the PSSCH transmission corresponding to the first data. The PSCCH is used to schedule the PSSCH, and the PSSCH is used to transmit the first data. It should be noted that the time domain position of the PSCCH transmission is located before the time domain position of the PSSCH transmission.

It should be noted that, in the embodiments of the present disclosure, the terminal device is in an active state within the active time of the terminal device. The "active time" may also be referred to as the "DRX active time", and the embodiments of the present disclosure do not limit the name of the active time.

In the embodiments of the present disclosure, the second terminal device side has the second timer.

In some optional implementations, the second timer may be understood as one timer, which may be understood as a unified timer on the transmitting side and the receiving side. The second terminal device is capable of performing at least one of transmission or reception during the running of the second timer. In other words, the second terminal device is in at least one of a transmitting active state or a receiving active state during the running of the second timer. In other words, a running period of the second timer is at least one of a tx active time or an rx active time of the second terminal device.

In some optional implementations, the second timer may be understood as two timers. Specifically, the second timer includes at least one of a second transmitting side timer or a second receiving side timer. The second terminal device is capable of transmitting during running of the second transmitting side timer; and the second terminal device is capable of receiving during running of the second receiving side timer. In other words, the second terminal device is in the transmitting active state during the running of the second transmitting side timer, and the second terminal device is in the receiving active state during the running of the second receiving side timer. In other words, the running period of the second transmitting side timer is the tx active time of the second terminal device, and the running period of the second receiving side timer is the rx active time of the second terminal device.

In the embodiments of the present disclosure, the timer in the above solution may be a drx-InactivityTimer, or may be simply referred to as an InactivityTimer. Not limited thereto, the timer in the above solution may also be other types of timers, and the terminal device is in the active state during the running of the times. For example, the timer in the above scheme may also be any one of the following timers:
drx-RetransmissionTimerDL;
drx-RetransmissionTimerUL;
ra-ContentionResolutionTimer; and
msgB-ResponseWindow.

As an example, the second terminal device has a tx inactivityTimer and an rx inactivityTimer.

As an example, the second terminal device has one inactivity timer, which may serve as both the tx inactivityTimer and the rx inactivityTimer.

In some optional implementations, in a case that the second terminal device is capable of transmitting, the second terminal device determines a sidelink resource and transmits a second physical transmission to a third terminal device on the sidelink resource. The third terminal device is same as or different from the first terminal device.

Here, the second terminal device may acquire the sidelink resource by itself through the resource selection manners. Specifically, the resource selection may be achieved with reference to the mode B or the mode 2 in the aforementioned related solutions.

In some optional implementations, in a case that the second terminal device is capable of transmitting, the second terminal device acquires a sidelink resource allocated by a network device and transmits a second physical transmission to a third terminal device on the sidelink resource. The third terminal device is same as or different from the first terminal device.

In some optional implementations, the second terminal device may acquire the sidelink resource allocated by the network device through the following manners. The second terminal device transmits at least one of a Scheduling Request (SR) or a Buffer Status Report (BSR) to the network device, and transmission resources of at least one of the SR or the BSR indicate at least one of: a starting time of the second timer; a duration of the second timer; an ending time of the second timer; or a duration of which a sidelink resource scheduled by the network device expected by the second terminal device. The second terminal device receives resource allocation information transmitted by the network device, and the resource allocation information is used to determine the sidelink resource.

Here, according to the implicit indication of the transmission resources of at least one of the SR or the BSR, the network device may determine at least one of: the second terminal device starts the second timer, the starting time of the second timer; the duration of the second timer; the ending time of the second timer; or the duration of which a sidelink resource scheduled by the network device expected by the second terminal device. The network device allocates the sidelink resource to the second terminal device according to the indication content. The time domain position of the allocated sidelink resource is within the running of the second timer, and thus, the second terminal device may adopt the allocated sidelink resource to transmit during the running of the second timer (i.e., the active time).

In some optional implementations, in a case that the second terminal device is capable of receiving, the second terminal device receives a third physical transmission transmitted by a third terminal device, and the third terminal device is same as or different from the first terminal device.

Here, the third physical transmission is associated with at least one of the first physical transmission or the second physical transmission.

In some optional implementations, the third physical transmission is a retransmission of the first physical transmission. For example, the second physical transmission carries the NACK information, the first terminal device determines that the first physical transmission is not successfully received by the second terminal device according to the NACK information, and retransmits the first physical transmission to the second terminal device.

In some optional implementations, the third physical transmission is a next new transmission of the first physical transmission. For example, the second physical transmission carries the ACK information, and the first terminal device determines that the first physical transmission is successfully received by the second terminal device according to the ACK information, and transmits a new transmission to the second terminal device.

In the technical solutions of the embodiments of the present disclosure, the second terminal device may, only being in the active state, transmit the physical transmissions to other terminal devices and/or receive the physical transmissions transmitted by other terminal devices. In order to shorten the interaction latency between the second terminal device and other terminal devices, the second terminal device starts or restarts the second timer for controlling the active state after receiving the first physical transmission, so that the second terminal device may interact with other terminal devices in time.

The technical solutions of the embodiments of the present disclosure are illustrated with examples in combination with specific application examples.

### First application example

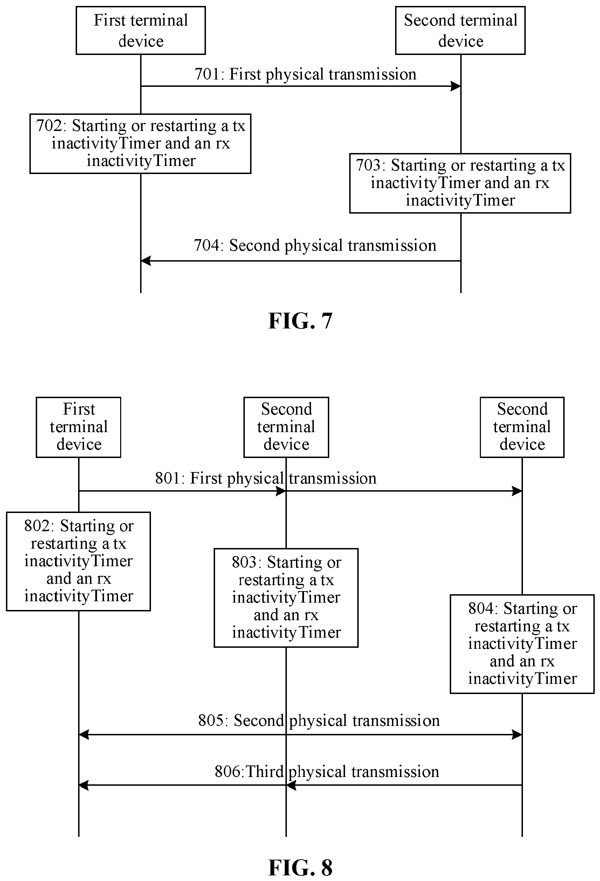

FIG. 7 is a third flowchart of a method for controlling a timer not being part of the present disclosure. As illustrated in FIG. 7, the method for controlling the timer includes the following operations.

In operation 701: a first terminal device transmits a first physical transmission to a second terminal device.

Here, the first terminal device needs to transmit the first physical transmission to the second terminal device within an active time of the second terminal device.

In operation 702: the first terminal device starts or restarts a tx inactivityTimer and an rx inactivityTimer after transmitting the first physical transmission.

In operation 703: the second terminal device starts or restarts the tx inactivityTimer and the rx inactivityTimer after receiving the first physical transmission.

In operation 704: the second terminal device transmits a second physical transmission to the first terminal device.

Here, since the tx inactivityTimer of the second terminal device has been started and the rx inactivityTimer of the first terminal device has been started, the second terminal device may transmit the second physical transmission to the first terminal device.

In the above solution, as an example, the first physical transmission may be a new transmission corresponding to the first data, and the second physical transmission may be a new transmission corresponding to the second data.

It should be noted that, in the above solution, the tx inactivityTimer and the rx inactivityTimer at the terminal device side may be achieved by two independent timers or by a unified timer.

It should be noted that, in the above solution, the second terminal device acquires the sidelink resource for the second physical transmission by adopting the resource selection manner by itself before transmitting the second physical transmission to the first terminal device. Specifically, the resource selection may be achieved with reference to the mode B or the mode 2 in the aforementioned related solutions.

It should be noted that the present disclosure does not limit the execution sequence of the above operations 702 and 703.

### Second application example

FIG. 8 is a fourth flowchart of a method for controlling a timer according to an embodiment of the present disclosure. As illustrated in FIG. 8, the method for controlling the timer includes the following operations.

In operation 801: a first terminal device transmits a first physical transmission to a second terminal device and a third terminal device.

Here, the first terminal device needs to transmit the first physical transmission to the second terminal device and the third terminal device within a common active time of the second terminal device and the third terminal device.

In operation 802: the first terminal device starts or restarts a tx inactivityTimer and an rx inactivityTimer after transmitting the first physical transmission.

In operation 803: the second terminal device starts or restarts the tx inactivityTimer and the rx inactivityTimer after receiving the first physical transmission.

In operation 804: the third terminal device starts or restarts the tx inactivityTimer and the rx inactivityTimer after receiving the first physical transmission.

In operation 805: the second terminal device transmits a second physical transmission to the first terminal device and the third terminal device.

Here, since the tx inactivityTimer of the second terminal device has been started and the rx inactivityTimers of the first terminal device and the third terminal device have been started, the second terminal device may transmit the second physical transmission to the first terminal device and the third terminal device.

In operation 806: the third terminal device transmits a third physical transmission to the first terminal device and the second terminal device.

Here, since the tx inactivityTimer of the third terminal device has been started and the rx inactivityTimers of the first terminal device and the second terminal device have been started, the third terminal device may transmit the third physical transmission to the first terminal device and the second terminal device.

In the above solution, as an example, the first physical transmission may be a new transmission corresponding to the first data, the second physical transmission may be a new transmission corresponding to the second data, and the third physical transmission may be a new transmission corresponding to the third data.

It should be noted that, in the above solution, the tx inactivityTimer and the rx inactivityTimer at the terminal device side may be achieved by two independent timers or by a unified timer.

It should be noted that, in the above solution, the second terminal device acquires the sidelink resource for the second physical transmission by adopting the resource selection manner by itself before transmitting the second physical transmission, and the third terminal device acquires the sidelink resource for the second physical transmission by adopting the resource selection manner by itself before transmitting the third physical transmission. Specifically, the resource selection may be achieved with reference to the mode B or the mode 2 in the aforementioned related solutions.

It should be noted that the present disclosure does not limit the execution sequence of the above operations 802 to 804. The present disclosure does not limit the execution sequence of the above operations 805 and 806.

### Third application example

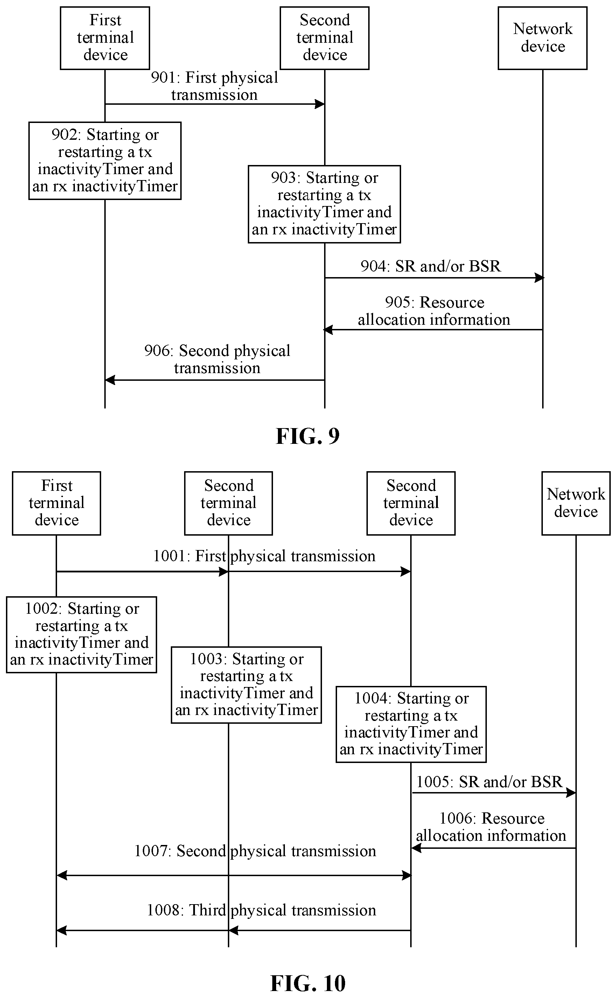

FIG. 9 is a fifth flowchart of a method for controlling a timer according to an embodiment of the present disclosure. As illustrated in FIG. 9, the method for controlling the timer includes the following operations.

In operation 901: a first terminal device transmits a first physical transmission to a second terminal device.

Here, the first terminal device needs to transmit the first physical transmission to the second terminal device within an active time of the second terminal device.

In operation 902: the first terminal device starts or restarts a tx inactivityTimer and an rx inactivityTimer after transmitting the first physical transmission.

In operation 903: the second terminal device starts or restarts the tx inactivityTimer and the rx inactivityTimer after receiving the first physical transmission.

In operation 904: the second terminal device transmits at least one of an SR or a BSR to the network device.

Here, time domain resources of at least one of the SR or the BSR indicate at least one of:
starting times of the tx inactivityTimer and the rx inactivityTimer at the second terminal device side;
durations of the tx inactivityTimer and the rx inactivityTimer at the second terminal device side;
ending times of the tx inactivityTimer and the rx inactivityTimer at the second terminal device side; or
durations of which a sidelink resource scheduled by the network device expected by the second terminal device.

The network device allocates the sidelink resource to a third terminal device according to an implicit indication of the time domain resources of at least one of the SR or the BSR.

In operation 905: the network device transmits resource allocation information to the second terminal device.

Here, the resource allocation information is used for the second terminal device to acquire the sidelink resource allocated by the network device. The resource allocation information may also be called as SL grant.

In operation 906: the second terminal device transmits a second physical transmission to the first terminal device based on the sidelink resource allocated by the network device.

Here, since the tx inactivityTimer of the second terminal device has been started and the rx inactivityTimer of the first terminal device has been started, the second terminal device may transmit the second physical transmission to the first terminal device.

In the above solution, as an example, the first physical transmission may be a new transmission corresponding to the first data, and the second physical transmission may be a new transmission corresponding to the second data.

It should be noted that, in the above solution, the tx inactivityTimer and the rx inactivityTimer at the terminal device side may be achieved by two independent timers or by a unified timer.

It should be noted that the present disclosure does not limit the execution sequence of the above operations 902 and 903.

### Fourth application example

FIG. 10 is a sixth flowchart of a method for controlling a timer according to an embodiment of the present disclosure. As illustrated in FIG. 10, the method for controlling the timer includes the following operations

In operation 1001: a first terminal device transmits a first physical transmission to a second terminal device and a third terminal device.

Here, the first terminal device needs to transmit the first physical transmission to the second terminal device and the third terminal device within a common active time of the second terminal device and the third terminal device.

In operation 1002: the first terminal device starts or restarts a tx inactivityTimer and an rx inactivityTimer after transmitting the first physical transmission.

In operation 1003: the second terminal device starts or restarts the tx inactivityTimer and the rx inactivityTimer after receiving the first physical transmission.

In operation 1004: the third terminal device starts or restarts the tx inactivityTimer and the rx inactivityTimer after receiving the first physical transmission.

In operation 1005: the third terminal device transmits at least one of an SR or a BSR to the network device.

Here, time domain resources of at least one of the SR or the BSR indicate at least one of:
starting times of the tx inactivityTimer and the rx inactivityTimer at the second terminal device side;
durations of the tx inactivityTimer and the rx inactivityTimer at the second terminal device side;
ending times of the tx inactivityTimer and the rx inactivityTimer at the second terminal device side; or
durations of which a sidelink resource scheduled by the network device expected by the second terminal device.

The network device allocates the sidelink resource to a third terminal device according to an implicit indication of the time domain resources of at least one of the SR or the BSR.

In operation 1006: the network device transmits resource allocation information to the third terminal device.

Here, the resource allocation information is used for the third terminal device to acquire the sidelink resource allocated by the network device. The resource allocation information may also be called as SL grant.

In operation 1007: the second terminal device transmits a second physical transmission to the first terminal device and the third terminal device based on the sidelink resource acquired by itself.

Here, since the tx inactivityTimer of the second terminal device has been started and the rx inactivityTimers of the first terminal device and the third terminal device have been started, the second terminal device may transmit the second physical transmission to the first terminal device and the third terminal device.

In operation 1008: the third terminal device transmits a third physical transmission to the first terminal device and the second terminal device based on the sidelink resource allocated by the network device.

Here, since the tx inactivityTimer of the third terminal device has been started and the rx inactivityTimers of the first terminal device and the second terminal device have been started, the third terminal device may transmit the third physical transmission to the first terminal device and the second terminal device.

In the above solution, as an example, the first physical transmission may be a new transmission corresponding to the first data, the second physical transmission may be a new transmission corresponding to the second data, and the third physical transmission may be a new transmission corresponding to the third data.

It should be noted that, in the above solution, the tx inactivityTimer and the rx inactivityTimer at the terminal device side may be achieved by two independent timers or by a unified timer.

It should be noted that, the present disclosure does not limit the execution sequence of the above operations 1002 to 1004. The present disclosure does not limit the execution sequence of the above operations 1007 and 1008.

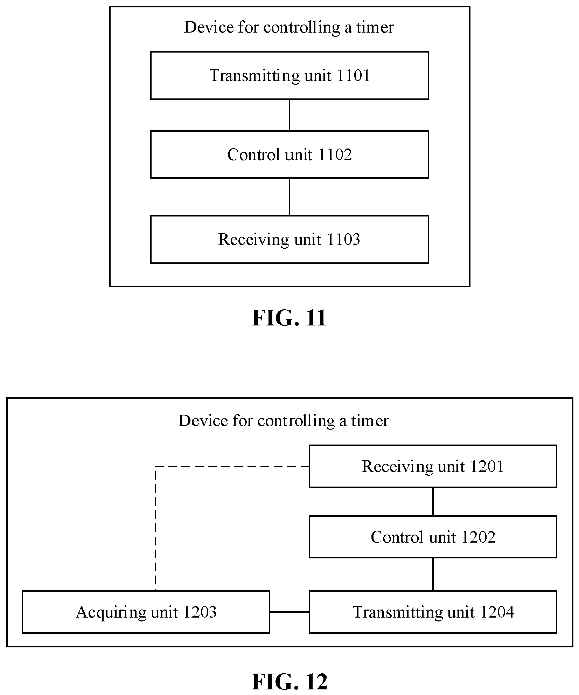

FIG. 11 is a first schematic structural diagram of a device for controlling a timer according to an embodiment of the present disclosure, which is applied to a first terminal device. As illustrated in FIG. 11, the device for controlling a timer includes a transmitting unit 1101 and a control unit 1102.

The transmitting unit 1101 is configured to transmit a first physical transmission to one or more second terminal devices.

The control unit 1102 is configured to start or restart a first timer after the transmitting unit transmits the first physical transmission to the one or more second terminal devices, and the first terminal device is in an active state during running of the first timer.

In some optional implementations not being part of the invention, the one or more second terminal devices include one terminal device.

The transmitting unit 1101 is configured to transmit the first physical transmission within an active time of the one terminal device.

In some implementations, the one or more second terminal devices include multiple terminal devices.

The transmitting unit 1101 is configured to transmit the first physical transmission within a common active time of the multiple terminal devices.

In some implementations, the first terminal device is capable of performing transmission and reception during the running of the first timer.

In some optional implementations, the first timer includes at least one of a first transmitting side timer or a first receiving side timer.

The first terminal device is capable of transmitting during running of the first transmitting side timer.

The first terminal device is capable of receiving during running of the first receiving side timer.

In some optional implementations, the device also includes a receiving unit 1103.

The receiving unit 1103 is configured to receive a second physical transmission transmitted by each of at least some of the one or more second terminal devices in a case that the first terminal device is capable of receiving.

In some optional implementations, the transmitting unit 1101 is also configured to transmit a third physical transmission to at least some of the one or more second terminal devices in a case that the first terminal device is capable of transmitting.

It is to be understood by those skilled in the art that the description of the device for controlling a timer described above in the embodiments of the present disclosure may be understood with reference to the description of the method for controlling a timer in the embodiments of the present disclosure.

FIG. 12 is a second schematic structural diagram of a device for controlling a timer according to an embodiment of the present disclosure, which is applied to a second terminal device. As illustrated in FIG. 12, the device for controlling a timer includes a receiving unit 1201 and a control unit 1202.

The receiving unit 1201 is configured to receive a first physical transmission transmitted by a first terminal device

The control unit 1202 is configured to start or restart a second timer after the receiving unit receives the first physical transmission transmitted by the first terminal device, and the second terminal device is in an active state during running of the second timer.

In some optional implementations, the second terminal device is capable of performing at least one of transmission or reception during the running of the second timer.

In some optional implementations, the second timer includes at least one of a second transmitting side timer or a second receiving side timer.

The second terminal device is capable of transmitting during running of the second transmitting side timer.

The second terminal device is capable of receiving during running of the second receiving side timer.

In some optional implementations, the device also includes an acquiring unit 1203 and a transmitting unit 1204.

In a case that the second terminal device is capable of transmitting, the acquiring unit 1203 is configured to determine a sidelink resource, and the transmitting unit 1204 is configured to transmit a second physical transmission to a third terminal device on the sidelink resource. The third terminal device is same as or different from the first terminal device.

In some optional implementations, the device also includes an acquiring unit 1203 and a transmitting unit 1204.

In a case that the second terminal device is capable of transmitting, the acquiring unit 1203 is configured to acquire a sidelink resource allocated by a network device, and the transmitting unit 1204 is configured to transmit a second physical transmission to a third terminal device on the sidelink resource. The third terminal device is same as or different from the first terminal device.

In some optional implementations, the transmitting unit 1204 is also configured to transmit at least one of an SR or a BSR to the network device, and transmission resources of at least one of the SR or the BSR indicates at least one of:
a starting time of the second timer;
a duration of the second timer:
   an ending time of the second timer; or
   a duration of which a sidelink resource scheduled by the network device expected by the second terminal device.

The receiving unit 1201 is also configured to receive resource allocation information transmitted by the network device, and the resource allocation information is used to determine the sidelink resource.

The acquiring unit 1203 is also configured to acquire the sidelink resource allocated by the network device based on the resource allocation information.

In some optional implementations, the receiving unit 1201 is also configured to receive a third physical transmission transmitted by a third terminal device in a case that the second terminal device is capable of receiving, and the third terminal device is same as or different from the first terminal device.

It is to be understood by those skilled in the art that the description of the device for controlling a timer described above in the embodiments of the present disclosure may be understood with reference to the description of the method for controlling a timer in the embodiments of the present disclosure.

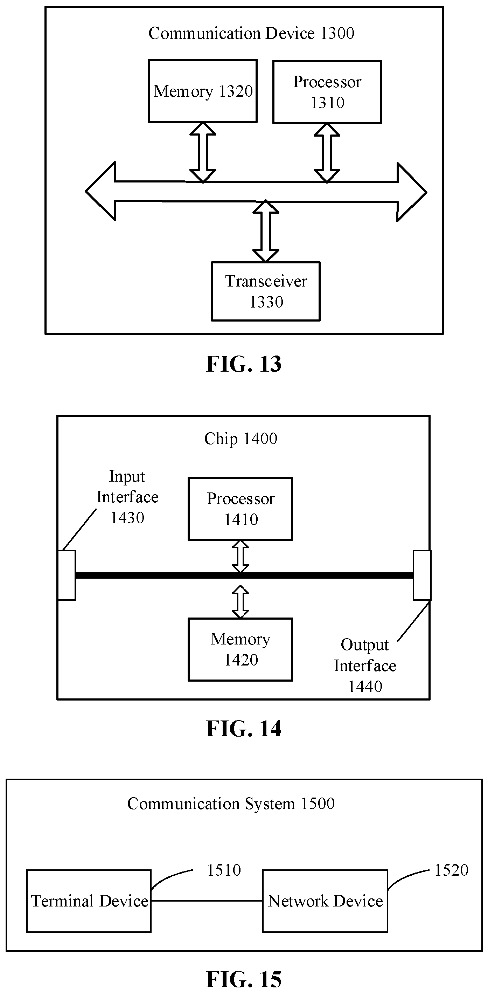

FIG. 13 is a schematic structural diagram of a communication device 1300 according to an embodiment of the present disclosure. The communication device may be the terminal device, such as a first terminal device or a second terminal device in the above scheme. The communication device 1300 illustrated in FIG. 13 includes a processor 1310. The processor 1310 may call a computer program from a memory and run the computer program to perform the method in the embodiments of the present disclosure.

In one example, as illustrated in FIG. 13, the communication device 1300 may also include a memory 1320. The processor 1310 may call a computer program from the memory 1320 and run the computer program to perform the method in the embodiments of the present disclosure.

The memory 1320 may be a separate device from the processor 1310, or may be integrated into the processor 1310.

In one example, as illustrated in FIG. 13, the communication device 1300 may also include a transceiver 1330. The processor 1310 may control the transceiver 1330 to communicate with another device, specifically, to transmit information or data to another device, or receive information or data from another device.

The transceiver 1330 may include a transmitter and a receiver. The transceiver 1330 may further include one or more antennas.

In one example, the communication device 1300 may specifically be the mobile terminal/terminal device in the embodiments of the present disclosure. The communication device 1300 may implement a corresponding process implemented by the mobile terminal/terminal device in each method of the embodiments of the disclosure, which will not be elaborated herein for brief description.

FIG. 14 is a schematic structural diagram of a chip according to an embodiment of the present disclosure. The chip 1400 illustrated in FIG. 14 includes a processor 1410. The processor 1410 can call a computer program from a memory and run the computer program to perform the method in the embodiments of the present disclosure.

In one example, as illustrated in FIG. 14, the chip 1400 may also include a memory 1420. The processor 1410 may call a computer program from the memory 1420 and run the computer program to perform the method in the embodiments of the present disclosure.

The memory 1420 may be a separate device from the processor 1410, or may be integrated in the processor 1410.

In one example, the chip 1400 may also include an input interface 1430. The processor 1410 may control the input interface 1430 to communicate with another device or chip, and specifically, may acquire information or data transmitted by another device or chip.

In one example, the chip 1400 may also include an output interface 1440. The processor 1410 may control the output interface 1440 to communicate with another device or chip, and specifically, may output information or data to another device or chip.

In one example, the chip may be applied to the mobile terminal/terminal device in the embodiments of the present disclosure. The chip may implement a corresponding process implemented by the mobile terminal/terminal device in each method of the embodiments of the disclosure, which will not be elaborated herein for brief description.

It is to be understood that in the embodiments of the disclosure, the chip may also be referred to as a system level chip, a system chip, a chip system or a system-on-chip.

FIG. 15 is a schematic block diagram of a communication system 1500 according to an embodiment of the present disclosure. As illustrated in FIG. 15, the communication system 1500 includes a terminal device 1510 and a network device 1520.

The terminal device 1510 may implement the corresponding functions implemented by the terminal device in the above methods, and the network device 1520 may implement the corresponding functions implemented by the network device in the above methods. Details will not be elaborated herein for brief description.

It is to be understood that in the embodiments of the disclosure, the processor may be an integrated circuit chip with a signal processing capability. In an implementation process, each operation of the method embodiments may be completed by an integrated logical circuit of hardware in the processor or instructions in a software form. The processor may be a universal processor, a Digital Signal Processor (DSP), an Application Specific Integrated Circuit (ASIC), a Field Programmable Gate Array (FPGA) or another programmable logical device, discrete gate or transistor logical device and discrete hardware component. Each method, step and logical block diagram disclosed in the embodiments of the disclosure may be implemented or executed. The universal processor may be a microprocessor or the processor may also be any related processor and the like. The operations of the methods disclosed in combination with the embodiments of the disclosure may be directly embodied to be executed and completed by a hardware decoding processor, or executed and completed by a combination of hardware and software modules in the decoding processor. The software module may be located in a mature storage medium in the art, such as a Random Access Memory (RAM), a flash memory, a Read-Only Memory (ROM), a Programmable ROM (PROM), an Electrically Erasable PROM (EEPROM) or a register. The storage medium is located in the memory. The processor reads information in the memory, and completes the operations of the above methods in combination with hardware of the processor.

It is to be understood that the memory in the embodiment of the disclosure may be a volatile memory or a non-volatile memory, or may include the volatile memory and the non-volatile memory. The non-volatile memory may be an ROM, a PROM, an Erasable PROM (EPROM), an EEPROM or a flash memory. The volatile memory may be an RAM and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It is to be noted that the memory of the system and the method described in the disclosure is intended to include but not limited to memories of these and any other suitable type.

It is to be understood that the above memory is exemplarily but unlimitedly described. For example, the memory in the embodiments of the disclosure may also be an SRAM, a DRAM, an SDRAM, a DDR SDRAM, an ESDRAM, an SLDRAM and a DR RAM. That is, the memory in the embodiments of the disclosure is intended to include but not limited to memories of these and any other suitable type.

The embodiments of the disclosure also provide a computer-readable storage medium for storing one or more computer programs.

In one embodiment, the computer-readable storage medium may be applied in the network device of the embodiments of the disclosure. The computer programs may enable a computer to perform the corresponding process implemented by the network device in each method of the embodiments of the disclosure, which will not be elaborated herein for brief description.

In one example, the computer-readable storage medium may be applied in the mobile terminal/terminal device of the embodiments of the disclosure. The computer programs may enable a computer to perform the corresponding process implemented by the mobile terminal/terminal device in each method of the embodiments of the disclosure, which will not be elaborated herein for brief description.

The embodiments of the disclosure also provide a computer program product. The computer program product includes one or more computer program instructions.

In one embodiment, the computer program product may be applied in the network device of the embodiments of the disclosure. The computer program instructions may enable a computer to perform the corresponding process implemented by the network device in each method of the embodiments of the disclosure, which will not be elaborated herein for brief description.

In one example, the computer program product may be applied in the mobile terminal/terminal device of the embodiments of the disclosure. The computer program instructions may enable a computer to perform the corresponding process implemented by the mobile terminal/terminal device in each method of the embodiments of the disclosure, which will not be elaborated herein for brief description.

The embodiments of the disclosure also provide a computer program.

In one embodiment, the computer program may be applied in the network device of the embodiments of the disclosure. The computer program, when executed by a computer, enables the computer to perform the corresponding process implemented by the network device in each method of the embodiments of the disclosure, which will not be elaborated herein for brief description.

In one example, the computer program may be applied in the mobile terminal/terminal device of the embodiments of the disclosure. The computer program, when executed by a computer, enables the computer to perform the corresponding process implemented by the mobile terminal/terminal device in each method of the embodiments of the disclosure, which will not be elaborated herein for brief description.

Those of ordinary skill in the art may realize that the units and algorithm operations of each example described in combination with the embodiments disclosed in the disclosure may be implemented by electronic hardware or a combination of computer software and the electronic hardware. Whether these functions are executed in a hardware or software manner depends on specific applications and design constraints of the technical solutions.

Those skilled in the art may clearly learn about that specific working processes of the system, device and unit described above may refer to the corresponding processes in the method embodiments and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the operations of the method in each embodiment of the disclosure. The abovementioned storage medium includes: various media capable of storing program codes such as a U disk, a mobile hard disk, a ROM, a RAM, a magnetic disk or an optical disk.

## Claims

1. A method for controlling a timer, **characterized in that** the method comprises:
starting or restarting (501), by a first terminal device, a first timer after transmitting a first physical transmission to a plurality of second terminal devices, the first terminal device being in an active state during running of the first timer,
wherein transmitting, by the first terminal device, the first physical transmission to the plurality of second terminal devices comprises:
transmitting, by the first terminal device, the first physical transmission within a common active time of the plurality of second terminal devices, and
wherein the first terminal device is capable of performing transmission and reception during the running of the first timer.

2. The method of claim 1, further comprising:
receiving, by the first terminal device, a second physical transmission transmitted by each of at least some of the plurality of second terminal devices.

3. A method for controlling a timer, **characterized in that** the method comprises:
starting or restarting (601), by each of a plurality of second terminal devices, a second timer after receiving a first physical transmission transmitted by a first terminal device, the each second terminal device being in an active state during running of the second timer,
wherein the first physical transmission is transmitted by the first terminal device within a common active time of the plurality of second terminal devices, and a first timer is started or restarted by the first terminal device after transmitting the first physical transmission to the plurality of second terminal devices, and during the running of the first timer, the first terminal device is in an active state and is capable of performing transmission and reception.

4. The method of claim 3, wherein the each second terminal device is capable of performing at least one of transmission or reception during the running of the second timer.

5. The method of claim 4, further comprising:
in a case that the each second terminal device is capable of transmitting, determining, by the each second terminal device, a sidelink resource, and transmitting a second physical transmission to a third terminal device on the sidelink resource, the third terminal device being same as or different from the first terminal device.

6. The method of claim 4, further comprising:
in a case that the each second terminal device is capable of transmitting, acquiring, by the each second terminal device, a sidelink resource allocated by a network device, and transmitting a second physical transmission to a third terminal device on the sidelink resource, the third terminal device being same as or different from the first terminal device.

7. The method of claim 6, wherein acquiring, by the each second terminal device, the sidelink resource allocated by the network device comprises:
transmitting, by the each second terminal device, at least one of a Scheduling Request (SR) or a Buffer Status Report (BSR) to the network device, transmission resources of at least one of the SR or the BSR indicating at least one of:
a starting time of the second timer;
a duration of the second timer;
an ending time of the second timer; or
a duration of which a sidelink resource scheduled by the network device expected by the each second terminal device; and
receiving, by the each second terminal device, resource allocation information transmitted by the network device, the resource allocation information being used to determine the sidelink resource.

8. A terminal device (1300), comprising: a processor (1310) and a memory (1320), wherein the memory (1320) is configured to store a computer program, and the processor (1310) is configured to call and execute the computer program stored in the memory (1320) to perform the method of claim 1 or 2.

9. A terminal device (1300), comprising: a processor (1310) and a memory (1320), wherein the memory (1320) is configured to store a computer program, and the processor (1310) is configured to call and execute the computer program stored in the memory (1320) to perform the method of any one of claims 3 to 7.

10. A chip (1400), comprising: a processor (1410), configured to call and execute a computer program in a memory (1420), to cause a device installed with the chip (1400) to perform the method of claim 1 or 2 or the method of any one of claims 3 to 7.

11. A computer readable storage medium, configured to store a computer program that causes a computer to perform the method of claim 1 or 2 or the method of any one of claims 3 to 7.

12. A computer program product, comprising one or more computer program instructions that cause a computer to perform the method of claim 1 or 2 or the method of any one of claims 3 to 7.

## Patentansprüche

1. Verfahren zum Steuern eines Timers, **dadurch gekennzeichnet, dass** das Verfahren umfasst:
Starten oder Neustarten (501), durch eine erste Endgerätevorrichtung, eines ersten Timers nach einem Senden einer ersten physischen Sendung zu einer Vielzahl von zweiten Endgerätevorrichtungen, wobei sich die erste Endgerätevorrichtung während der Laufzeit des ersten Timers in einem aktiven Zustand befindet,
wobei das Senden der ersten physischen Sendung von der ersten Endgerätevorrichtung zu der Vielzahl von zweiten Endgerätevorrichtungen umfasst:
Senden der ersten physischen Sendung von der ersten Endgerätevorrichtung innerhalb eines gemeinsamen aktiven Zeitraums der Vielzahl von zweiten Endgerätevorrichtungen, und
wobei die erste Endgerätevorrichtung in der Lage ist, ein Senden und ein Empfangen während der Laufzeit des ersten Timers durchzuführen.

2. Verfahren nach Anspruch 1, das ferner umfasst:
Empfangen, in der ersten Endgerätevorrichtung, einer zweiten physischen Sendung, die von jeder von mindestens einigen aus der Vielzahl von zweiten Endgerätevorrichtungen gesendet werden.

3. Verfahren zum Steuern eines Timers, **dadurch gekennzeichnet, dass** das Verfahren umfasst:
Starten oder Neustarten (601), durch jede aus einer Vielzahl von zweiten Endgerätevorrichtungen, eines zweiten Timers nach einem Empfangen einer ersten physischen Sendung, die von einer ersten Endgerätevorrichtung gesendet wird, wobei sich jede zweite Endgerätevorrichtung während der Laufzeit des zweiten Timers in einem aktiven Zustand befindet,
wobei die erste physische Sendung von der ersten Endgerätevorrichtung innerhalb eines gemeinsamen aktiven Zeitraums der Vielzahl von zweiten Endgerätevorrichtungen gesendet wird, und wobei ein erster Timer nach dem Senden der ersten physischen Sendung zu der Vielzahl von zweiten Endgerätevorrichtungen, von der ersten Endgerätevorrichtung gestartet oder neugestartet wird, und wobei sich die erste Endgerätevorrichtung während der Laufzeit des ersten Timers in einem aktiven Zustand befindet und in der Lage ist, ein Senden und ein Empfangen durchzuführen.

4. Verfahren nach Anspruch 3, wobei jede der zweiten Endgerätevorrichtungen in der Lage ist, mindestens eines von einem Senden und einem Empfangen während der Laufzeit des zweiten Timers durchzuführen.

5. Verfahren nach Anspruch 4, das ferner umfasst:
in einem Fall, in dem jede der zweiten Endgerätevorrichtungen zum Senden in der Lage ist, Ermitteln, durch jede der zweiten Endgerätevorrichtungen, einer Sidelink-Ressource, und Senden einer zweiten physischen Sendung mit der Sidelink-Ressource zu einer dritten Endgerätevorrichtung, wobei die dritte Endgerätevorrichtung die gleiche wie die erste Endgerätevorrichtung ist oder verschieden von dieser ist.

6. Verfahren nach Anspruch 4, das ferner umfasst:
in einem Fall, in dem jede der zweiten Endgerätevorrichtungen zum Senden in der Lage ist, Beschaffen, durch jede der zweiten Endgerätevorrichtungen, einer Sidelink-Ressource, die von einer Netzwerkvorrichtung zugewiesen wird, und Senden einer zweiten physischen Sendung mit der Sidelink-Ressource zu einer dritten Endgerätevorrichtung, wobei die dritte Endgerätevorrichtung die gleiche wie die erste Endgerätevorrichtung ist oder verschieden von dieser ist.

7. Verfahren nach Anspruch 6, wobei das Beschaffen, durch jede der zweiten Endgerätevorrichtungen, der Sidelink-Ressource, die von einer Netzwerkvorrichtung zugewiesen wird, umfasst:
Senden mindestens einer von einer Planungsanforderung (SR) oder einem Pufferzustandsbericht (BSR) von jeder der zweiten Endgerätevorrichtungen zu der Netzwerkvorrichtung, wobei die Senderessourcen von mindestens einer der SR oder des BSR mindestens eines anzeigen von:
einem Startzeitpunkt des zweiten Timers;
einer Zeitdauer des zweiten Timers;
einem Endzeitpunkt des zweiten Timers; oder
einer Zeitdauer, die für eine Sidelink-Ressource, die von der Netzwerkvorrichtung geplant wird, von jeder der zweiten Endgerätevorrichtungen erwartet wird; und
Empfangen, in jeder der zweiten Endgerätevorrichtungen, von Ressourcenzuweisungsinformationen, die von der Netzwerkvorrichtung gesendet werden, wobei die Ressourcenzuweisungsinformationen verwendet werden, um die Sidelink-Ressourcen zu ermitteln.

8. Endgerätevorrichtung (1300), umfassend: einen Prozessor (1310) und einen Speicher (1320), wobei der Speicher (1320) konfiguriert ist zum Speichern eines Computerprogramms und wobei der Prozessor (1310) konfiguriert ist zum Aufrufen und Ausführen des Computerprogramms, das in dem Speicher (1320) gespeichert ist, um das Verfahren nach Anspruch 1 oder 2 durchzuführen.

9. Endgerätevorrichtung (1300), umfassend: einen Prozessor (1310) und einen Speicher (1320), wobei der Speicher (1320) konfiguriert ist zum Speichern eines Computerprogramms, und wobei der Prozessor (1310) konfiguriert ist zum Aufrufen und Ausführen des Computerprogramms, das in dem Speicher (1320) gespeichert ist, um das Verfahren nach einem der Ansprüche 3 bis 7 durchzuführen.

10. Chip (1400), umfassend: einen Prozessor (1410), der konfiguriert ist zum Aufrufen und Ausführen eines Computerprogramms in einem Speicher (1420), um eine Vorrichtung, die in dem Chip (1400) installiert ist, zu veranlassen, das Verfahren nach Anspruch 1 oder 2 oder das Verfahren nach einem der Ansprüche 3 bis 7 durchzuführen.

11. Computerlesbares Speichermedium, das konfiguriert ist zum Speichern eines Computerprogramms, das einen Computer veranlasst, das Verfahren nach Anspruch 1 oder 2 oder das Verfahren nach einem der Ansprüche 3 bis 7 durchzuführen.

12. Computerprogrammprodukt, das eine oder mehrere Computerprogrammanweisungen umfasst, die einen Computer veranlassen, das Verfahren nach Anspruch 1 oder 2 oder das Verfahren nach einem der Ansprüche 3 bis 7 durchzuführen.

## Revendications

1. Procédé pour commander une minuterie, **caractérisé en ce que** le procédé comprend :
le démarrage ou redémarrage (501), par un premier dispositif de terminal, d'une première minuterie après la transmission d'une première transmission physique à une pluralité de deuxièmes dispositifs de terminal, le premier dispositif de terminal étant dans un état actif durant le fonctionnement de la première minuterie,
dans lequel la transmission, par le premier dispositif de terminal, de la première transmission physique à la pluralité de deuxièmes dispositifs de terminal comprend :
la transmission, par le premier dispositif de terminal, de la première transmission physique dans les limites d'un temps actif commun de la pluralité de deuxièmes dispositifs de terminal, et
dans lequel le premier dispositif de terminal est capable de réaliser une transmission et une réception durant le fonctionnement de la première minuterie.

2. Procédé de la revendication 1, comprenant en outre : la réception, par le premier dispositif de terminal, d'une deuxième transmission physique transmise par chacun d'au moins certains de la pluralité de deuxièmes dispositifs de terminal.

3. Procédé pour commander une minuterie, **caractérisé en ce que** le procédé comprend :
le démarrage ou redémarrage (601), par chacun d'une pluralité de deuxièmes dispositifs de terminal, d'une seconde minuterie après la réception d'une première transmission physique transmise par un premier dispositif de terminal, chaque deuxième dispositif de terminal étant dans un état actif durant le fonctionnement de la seconde minuterie,
dans lequel la première transmission physique est transmise par le premier dispositif de terminal dans les limites d'un temps actif commun de la pluralité de deuxièmes dispositifs de terminal, et une première minuterie est démarrée ou redémarrée par le premier dispositif de terminal après la transmission de la première transmission physique à la pluralité de deuxièmes dispositifs de terminal, et, durant le fonctionnement de la première minuterie, le premier dispositif de terminal est dans un état actif et est capable de réaliser une transmission et une réception.

4. Procédé de la revendication 3, dans lequel chaque deuxième dispositif de terminal est capable de réaliser au moins un élément parmi une transmission ou une réception durant le fonctionnement de la seconde minuterie.

5. Procédé de la revendication 4, comprenant en outre : dans un cas où chaque deuxième dispositif de terminal est capable de transmettre, la détermination, par chaque deuxième dispositif de terminal, d'une ressource de liaison latérale, et la transmission d'une deuxième transmission physique à un troisième dispositif de terminal sur la ressource de liaison latérale, le troisième dispositif de terminal étant identique au premier dispositif de terminal ou différent de celui-ci.

6. Procédé de la revendication 4, comprenant en outre : dans un cas où chaque deuxième dispositif de terminal est capable de transmettre, l'acquisition, par chaque deuxième dispositif de terminal, d'une ressource de liaison latérale attribuée par un dispositif de réseau, et la transmission d'une deuxième transmission physique à un troisième dispositif de terminal sur la ressource de liaison latérale, le troisième dispositif de terminal étant identique au premier dispositif de terminal ou différent de celui-ci.

7. Procédé de la revendication 6, dans lequel l'acquisition, par chaque deuxième dispositif de terminal, de la ressource de liaison latérale attribuée par le dispositif de réseau comprend :
la transmission, par chaque deuxième dispositif de terminal, d'au moins un élément parmi une demande d'ordonnancement, « Scheduling Request » (SR), ou un rapport d'état de mémoire tampon, « Buffer Status Report » (BSR), au dispositif de réseau, des ressources de transmission d'au moins un élément parmi la SR ou le BSR indiquant au moins un élément parmi :
un temps de démarrage de la seconde minuterie ;
une durée de la seconde minuterie ;
un temps de fin de la seconde minuterie ; ou
une durée d'une ressource de liaison latérale, ordonnancée par le dispositif de réseau, attendue par chaque deuxième dispositif de terminal ; et
la réception, par chaque deuxième dispositif de terminal, d'informations d'attribution de ressource transmises par le dispositif de réseau, les informations d'attribution de ressource étant utilisées pour déterminer la ressource de liaison latérale.

8. Dispositif de terminal (1300), comprenant : un processeur (1310) et une mémoire (1320), dans lequel la mémoire (1320) est configurée pour stocker un programme d'ordinateur, et le processeur (1310) est configuré pour appeler et exécuter le programme d'ordinateur stocké dans la mémoire (1320) pour réaliser le procédé de la revendication 1 ou 2.

9. Dispositif de terminal (1300), comprenant : un processeur (1310) et une mémoire (1320), dans lequel la mémoire (1320) est configurée pour stocker un programme d'ordinateur, et le processeur (1310) est configuré pour appeler et exécuter le programme d'ordinateur stocké dans la mémoire (1320) pour réaliser le procédé de l'une quelconque des revendications 3 à 7.

10. Puce (1400), comprenant : un processeur (1410), configuré pour appeler et exécuter un programme d'ordinateur dans une mémoire (1420), pour amener un dispositif sur lequel est installée la puce (1400) à réaliser le procédé de la revendication 1 ou 2 ou le procédé de l'une quelconque des revendications 3 à 7.

11. Support de stockage lisible par ordinateur, configuré pour stocker un programme d'ordinateur qui amène un ordinateur à réaliser le procédé de la revendication 1 ou 2 ou le procédé de l'une quelconque des revendications 3 à 7.

12. Produit-programme d'ordinateur, comprenant une ou plusieurs instructions de programme d'ordinateur qui amènent un ordinateur à réaliser le procédé de la revendication 1 ou 2 ou le procédé de l'une quelconque des revendications 3 à 7.
